# EUROPEAN PATENT APPLICATION

(11) **EP 4 108 316 A1**
(43) Date of publication of application: **28.12.2022**
(21) Application number: 21181894.3
(22) Date of filing: 25.06.2021
(51) Int. Cl.: B01D 53/50, B01D 53/62, B01D 53/83, F23J 15/00, C04B 7/36, C21B 3/00, F23G 5/00, C04B 18/16

(54) **METHOD FOR PERFORMING DESULFURIZATION AND DECARBONIZATION OF A FLUE GAS**

(71) Applicant: Sika Technology AG, 6340 Baar (CH)
(72) Inventor: Eberhardt, Bernd Arnd, 8400 Winterthur (CH); Kostic, Sanja, 4600 Olten (CH); Bächli, René, 8157 Dielsdorf (CH); Höfflin, Frank, 5400 Baden (CH); Gallucci, Emmanuel, 8048 Zürich (CH); Juilland, Patrick, 3005 Bern (CH); Pegado, Luis, 5200 Brugg (CH); Frunz, Lukas, 8305 Dietlikon (CH)
(74) Representative: Sika Patent Attorneys

(57) **Abstract**

Disclosed is a method for the desulfurization and decarbonization of a flue gas comprising sulfur oxides and carbon dioxide, said method comprising a step of treating said flue gas with a material reactive towards sulfur oxides and carbon dioxide, characterized in that said reactive material is waste construction material.

## Description

### Technical field

The invention relates to methods for the treatment of flue gas, especially to the simultaneous desulfurization and decarbonization of flue gas, by waste construction material.

### Background of the invention

Carbon dioxide is currently being released in the atmosphere in large quantities. Significant sources of carbon dioxide released in the atmosphere still are flue gases. Flue gases result for example from the combustion of fossile fuels for energy generation. Another important source of flue gases rich in carbon dioxide are exhaust gases from cement production.

Additionally, wherever organic material containing sulfur is burned, exhaust gases containing environmentally harmful sulfur oxides (abbreviated as SOₓ, mainly SO₂ and SO₃) are produced. In coal-fired power plants, waste incineration or pig iron production in steel mills, sulfur oxides are produced, which must be properly removed from flue gases in accordance with existing regulations.

In the past, it was acceptable to allow flue gas discharge from electric utilities and industrial operations directly into the atmosphere without further treatment of the flue gas. However, with increasing evidence about environmental damage linked to, for example, the acidification of the atmosphere as a result of sulphur oxide emissions, and the risk of adverse climate change from global warming due to carbon dioxide emissions, flue gas treatment to mitigate emissions have become more important to comply to regulations and air quality standards. Current technologies for flue gas treatment involve resource and energy intensive processes.

Various methods and chemicals have been used to sequester sulfur oxides and/or carbon dioxide from flue gases.

For example, WO 2011/089332 discloses a process for the decarbonation and desulfurization of flue gases by contacting with an aqueous solution of N,N,N',N'-tetramethylhexane-1,6-diamine.

EP 2838640 discloses a method for desulfurization and decarbonization of flue gases by reaction with an electropositive metal.

EP2722096 discloses a method for the desulfurization of flue gas by reaction with solid calcium oxide.

WO 2015/154174 discloses a method of sequestering carbon dioxide from cement and lime facilities comprising a step of treating one or more building products with the carbon dioxide.

However, the various methods of the state of the art often relate only to desulfurization or decarbonation. In addition, they often require additional method steps which can be difficult to perform and/or additional chemicals, making the existing methods expensive and sometimes detrimental to the environment. For example, the WO 2015/154174 teaches that the level of sulfur oxides in CO₂ to be sequestered needs to be low enough so as not to interfere with the making of a building product. Additional steps of removing sulfur oxides from the flue gas before CO₂ sequestration are thus needed.

There is thus a continued need for improved methods for the treatment of flue gases, especially for the simultaneous desulfurization and decarbonization of flue gases.

### Summary of the invention

It is an object of the present invention to provide methods for the desulfurization and decarbonization of flue gases. Especially, such methods should utilize readily available materials, preferably waste or recycling materials. Additionally, such methods should be useful for the simultaneous desulfurization and decarbonization of flue gases. Also, such methods should work without or minimal pre-treatment of flue gases.

Surprisingly, it was found that waste construction material can be used for the desulfurization and decarbonation of flue gases containing sulfur oxides and carbon dioxide. The objective of the present invention is thus solved by a method as claimed in claim 1.

It is one special advantage of the present invention that waste construction material can be used. Waste construction material would otherwise be dumped in landfills. In a method of the present invention waste construction material can now be put to a valuable use. Additionally, no noxious, dangerous, or expensive chemicals which require special handling and complex disposal have to be used in methods of the present invention.

It is another special advantage of the present invention that a recycled construction material is obtained in a method of the present invention. This recycled construction material being the waste construction material reacted with sulfur oxides and carbon dioxide form the flue gas. The recycled construction material can be used for the production of fresh construction material, especially fresh concrete or mortar. The present invention thus represents a step towards a circular economy in construction materials.

Further aspects of the present invention are the subject matter of independent claims. Preferred embodiments are the subject matter of dependent claims.

### Ways of carrying out the invention

In a first aspect the present invention relates to a method for the desulfurization and decarbonization of a flue gas comprising sulfur oxides and carbon dioxide, said method comprising a step of treating said flue gas with a material reactive towards sulfur oxides and carbon dioxide, characterized in that said reactive material is waste construction material.

The term flue gas within the present context is meant to all sort of exhaust gases resulting from the combustion of organic matter and to exhaust gases from cement or lime production. Organic matter in this respect relates to, for example, wood, municipal wastes such as sewage sludge, or fossile fuels such as gas, oil, and coal. Flue gases include the combustion exhaust gas produced at power plants. The composition thereof depends on what is being burned with carbon dioxide and sulfur oxides being prominent pollutants. Other pollutants are for example nitrogen oxides. Cement and lime production releases carbon dioxide gas from the calcination of limestone in the raw materials and the combustion of fuels used in the cement and lime manufacturing processes. For this reason, the flue gases from cement and lime production are some of the richest sources of flue gas carbon dioxide. Because of these two sources, the carbon dioxide content of flue gas from cement and lime manufacture may be 14 - 33% by volume, compared to appr. 4% for a natural gas fired combined cycle power plant and 9 - 15% or 15 - 20% for a coal fired power plant.

In certain embodiments of the present invention, the flue gas may be concentrated before desulfurization and decarbonation by such means as oxy-combustion and / or indirect calcination. In certain embodiments the flue gas may be concentrated due to pre-combustion technologies such as the use of metal oxides, etc. In other embodiments of the present invention, the flue gas may already be available in a sufficiently concentrated form.

In certain embodiments of the present invention, the flue gas may be cleaned, e.g. by means of a fabric filter, a membrane, an electro filtration unit, and/or a separator. If necessary, unwanted impurities such as powder particles, nitrous gases, and/or halogenated organics may thus be removed.

In certain embodiments of the present invention one or more compression units are used in a method of the present invention. For example, a compression unit may be configured to compress the flue gas stream including the sulfur oxides and carbon dioxide. In particular, the compression unit can be positioned upstream from a reaction chamber adapted to chemically react waste construction material with sulfur oxides and carbon dioxide in flue gas. If desired, an expander may be additionally positioned downstream from reaction chamber adapted to chemically react waste construction material with sulfur oxides and carbon dioxide in flue gas.

According to preferred embodiments, the flue gas is cooled to an adequate temperature in a method of the present invention. It can for example be desirable to cool the flue gas from a temperature of 130 °C - 170 °C to a temperature of 60 °C.

The term "desulfurization" as used in the present context relates to the process of sequestering sulfur oxides from a flue gas. As such, the measurable content of sulfur and/or of sulfur oxides in said flue gas is reduced. In principle, any reduction of the content of sulfur oxides in the flue gas is desirable. It is, for example, possible to reduce the content of sulfur oxides in a flue gas by a method of the present invention by at least 5%, preferably by at least 15%, more preferably by at least 45%, still more preferably by at least 70%, especially by at least 85%. Within the present context desulfurization may for example take place by the chemical reaction of species of calcium oxide and/or calcium hydroxide with SOₓ. For example according to the following chemical equation (I):

CaO + SO₂ → CaSO₃ (I)

It is also possible within the present context that carbonates, especially calcium carbonate, present in the waste construction material react with sulfur oxides and water to form sulfites and carbon dioxide. For example according to the following chemical equation (II):

CaCO₃ + SO₂ → CaSO₃ + CO₂

Reaction (II) is especially possible in the presence of water.

According to embodiments, it is possible to reduce the emissions of sulfur oxides from a flue gas by a method of the present invention such that no more than 250 mg/m³ are being released at a mass flow of 2500 g/h.

The term "decarbonation" as used in the present context relates to the process of sequestering carbon dioxide (CO₂) from a flue gas. As such, the measurable content of carbon dioxide in said flue gas is reduced. In principle, any reduction of the CO₂ content in the flue gas is desirable. It is, for example, possible to reduce the content of CO₂ in a flue gas by a method of the present invention by at least 5%, preferably by at least 15%, more preferably by at least 45%, still more preferably by at least 70%, especially by at least 85%.

Especially, a decarbonation in the present context is effected by the chemical reaction of hardened mineral binder from waste construction material with carbon dioxide present in the flue gas. This process is identical to the carbonatization of said hardened mineral binders. For example, a hardened mineral binder in the form of hydraulic cement, comprising an substantial amount of calcium oxides and/or calcium hydroxides of can react with carbon dioxide to form corresponding carbonates thus decarbonizing a flue gas. For example, according to the following chemical equation (III):

Ca(OH)₂ + CO₂ → CaCO₃ + H₂O (III)

The progress of carbonatization of a mineral binder can be determined, for example, by measuring the pH. If the pH decreases carbonation is occurring. If the pH does not drop further, then essentially complete carbonation can be assumed. Essentially complete carbonation is usually achieved at a pH of 7 - 10, preferably 7 - 9.

According to embodiments, it is possible to reduce the emissions of carbon dioxide of, for example, a power plant to a value of not more than 750 g/kWh, preferably not more than 500 g/kWh, especially not more than 450 g/kWh, calculated as g carbon dioxide emitted per kWh of energy produced.

According to embodiments, in a method of the present invention, the desulfurization and decarbonation is done simultaneously.

Within the present context the term "waste construction material" refers to construction material comprising hardened mineral binder and which is not intended for its original purpose. Waste construction material especially is surplus material, off-spec material, returned material or demolition waste. Especially, the waste construction material is demolition waste. The waste construction material within the present context contains at least one hardened mineral binder but is otherwise not limited in its composition. It may, for example, additionally contain at least one aggregate. According to preferred embodiments, the waste construction material comprises at least one aggregate and at least one mineral binder. Mineral binders within the present context are inorganic materials with a content of CaO and/or Ca(OH)₂. Hardened mineral binders are mineral binders that have set and cured and contain CaO and/or Ca(OH)₂. Setting and curing preferably is by hydraulic reaction of the mineral binder. Suitable mineral binders within the present context especially are cements, lime, and latent hydraulic binders.

Cements can in particular be cements as described in standard EN 197-1, especially Portland cements and slag cements, calcium aluminate cements as described in standard EN 14647, and/or calcium sulfoaluminate cements. The term "lime" is meant to encompass natural hydraulic lime, formulated lime, hydraulic lime, and air lime as described in the standard EN 459-1:2015. Suitable latent hydraulic materials are in particular slags.

Of course, different waste construction materials may comprise at least one mineral binder, especially at least one cement, lime, and/or latent hydraulic binder, in different amounts. It is preferred within the present context that the amount of CaO and/or Ca(OH)₂ in the waste construction material is not lower than 10 w%, preferably not lower than 20 w%, more preferably not lower than 30 w%, still more preferably not lower than 40 w%, especially not lower than 60 w%, in each case relative to the total dry mass of the waste construction material. The amount of CaO and/or Ca(OH)₂ in waste construction material can be determined by XRF analysis.

According to embodiments, the waste construction material is a waste material selected from the group consisting of cement-based materials such as concrete and mortar. It is especially also possible that the waste construction material is a mix of different waste construction materials. For example, the waste construction material can be concrete or mortar, mixtures of concrete and gypsum-based materials, mixtures of concrete and plaster, mixtures of brick and mortar, mixtures of brick, mortar, and plaster, etc. Metal fibers, especially steel fibers, polymer fibers, and/or glass may also be contained in waste construction material. It is, however, preferred, that the waste construction material does not contain large pieces of metals or wood. Where the waste construction material is a mixed waste construction material, the amount of CaO and/or Ca(OH)₂ in the mixed waste construction material should be not lower than 10 w%, preferably not lower than 20 w%, more preferably not lower than 30 w%, still more preferably not lower than 40 w%, especially not lower than 60 w%, in each case relative to the total dry mass of the mixed waste construction material.

According to especially preferred embodiments, the waste construction material comprises or consists of waste concrete or mortar, especially waste concrete or mortar from demolition.

The waste construction material can be pre-treated before being put to a method of the present invention. Pre-treatment is especially the crushing of waste construction material, the grinding thereof, and/or the sorting according to materials. Where crushing is performed, it is preferred that the size of crushed material is bigger than the particle size of the biggest aggregate. Especially the waste construction material of the present invention is crushed and/or grinded.

It is further possible to pre-treat the waste construction material by chemical means or by combined chemo-mechanical means. Chemical means include for example, carbonization, acid treatment, and/or solution and precipitation of waste construction material.

The waste construction material used in a method of the present invention cannot be 100% carbonized. According to embodiments, the degree of carbonization of waste construction material to be used in a method of the present invention is not higher than 80%, preferably not higher than 66%, more preferably not higher than 50%, still more preferably not higher than 33%, especially not higher than 10%. It has been found that such degree of carbonization of the waste construction material leads to particularly efficient desulfurization and decarbonation of flue gas. The degree of carbonization of waste construction material can, for example, be determined by measuring the pH of said material and comparison to the pH measured for the same kind of material without carbonization and the same kind of material fully carbonized. The degree of carbonization can also be determined by analysis of the phase composition of the waste construction material, for example by XRD methods.

The particle size and particle shape of the waste construction material to be used in a method of the present invention is not particularly limited. Pieces or particles of different sizes and shapes can be used. It is, for example, possible to use pieces of concrete with an average diameter of 5 cm or bigger, especially of 10 cm, 20 cm or 40 cm. It is, however, preferred that the particle size of the waste construction material is relatively small. Examples of suitable particle sizes are 0.001 - 400 mm, preferably 0.01 - 100 mm, more preferably 0.063 - 32 mm. The particle size can, for example, be measured by sieve analysis as described in standard EN 933-1. A smaller particle size will lead to more efficient desulfurization and decarbonation of flue gas.

According to some embodiments, the waste construction material is mechanically agitated in a method of the present invention. A method of the present invention may thus contain an additional step of mechanically agitating the waste construction material. Mechanical agitation can be done by means of a grinding machine, for example a vertical roller mill or a ball mill, by a tumbler, by mixers, for example paddle mixers, propeller mixers, and screw-extruders, or in the form of a fluid bed. According to a preferred embodiment of the present invention, the waste construction material is mechanically agitated during the desulfurization and decarbonation of flue gas.

It is possible for a method of the present invention to additionally contain a step of oxidizing sulfur components obtained from the desulfurization of the flue gas.

Oxidation can be performed by oxidants known to the person skilled in the art per se. For example, peroxides, chlorine, or oxygen can be used as oxidants. According to a preferred embodiment of the present invention, oxygen is used as an oxidant. The oxygen can be provided by air or by pure oxygen. Alternatively, or additionally, the oxidant can comprise oxygen that is present in a mixed gas stream such as the flue gas. For example, a flue gas from a power production plant can be a mixed gas stream that includes oxygen.

The reaction products of the oxidation reaction especially are sulfates.

A method of the present invention may be run batchwise, semi-continuously, or continuously. A continuous mode is preferred.

According to preferred embodiments, a minimum of moisture is present in the waste construction material and/or in the flue gas. This enables particularly efficient desulfurization and decarbonation of the flue gas. According to embodiments, the humidity in the flue gas is between 0% to 100%, preferably 30% to 90% relative humidity. The flue gas can be humidified by spraying water in a stream of flue gas. This has the additional advantage of cooling the flue gas. It is preferred to limit the relative humidity in the flue gas, to avoid the agglomeration of the powdery material obtained. The humidity in the flue gas can be adjusted to the humidity of the waste construction material. According to embodiments, the flue gas has a lower relative humidity when the waste construction material is wet. In such cases, the flue gas can be used to dry the waste construction material to avoid unwanted agglomerations. The humidity of the waste construction material can vary in a wide range. It is, however, preferred that the waste construction material is not completely dry. According to certain embodiments, the waste construction material is sprayed with water before and/or during the reaction with the flue gas takes place. It is in principle also possible to run a method of the present invention at higher humidity and even in a water bath.

According to embodiments, it is possible in a method of the present invention to introduce the waste construction material directly into the combustion chamber where organic material is being burnt. In such embodiments, the waste construction material preferably is finely ground. Finely ground means that the particle size as measured by sieve analysis according to standard EN 933-1 is between 0.001 - 32 mm, preferably 0.01 - 2 mm, more preferably 0.063 -1 mm.

According to other embodiments, in a method of the present invention, the waste construction material is provided in a separate apparatus and is contacted with the flue gas therein. In this embodiment, the desulfurization and decarbonation of the flue gas takes place in said separate apparatus.

In a second aspect the present invention also relates to an apparatus for the desulfurization and decarbonation of a flue gas with waste construction material (1), said apparatus for the desulfurization and decarbonation comprising:
a) at last one reaction chamber (2) adapted to chemically react waste construction material (3) with sulfur oxides and carbon dioxide in flue gas,
b) optionally means for the mechanical agitation of the waste construction material,
c) optionally a compression unit positioned upstream of the at least one reaction chamber,
d) optionally an expander positioned downstream of the at least one reaction chamber.

According to embodiments, a compression unit is positioned upstream of the at least one reaction chamber. This can include, in some embodiments, pressurizing the flue gas including the sulfur oxides and the carbon dioxide to a pressure of about 3 bar to about 15 bar to provide a pressurized flue gas including the sulfur oxides and the carbon dioxide. Pressurization can utilize one or more compression units. When multiple compression units are used, it can be preferred to utilize intercooling to remove the heat of compression after one or more of the pressurization stages.

According to embodiments an apparatus of the present invention may additionally have cooling and/or heating means. Cooling means can be especially preferred to lead away the heat of reaction released during desulfurization and decarbonation. In certain embodiments, the energy obtained from the exothermic reaction of the waste construction material with the flue gas can also be used for providing energy to pumps and other equipment.

Where an oxidation step is carried out in a method of the present invention, it is preferred that such oxidation is carried out directly in the reaction chamber adapted to chemically react waste construction material with sulfur oxides and carbon dioxide in flue gas. In such cases, the reaction chamber preferably comprises means for introduction of an oxidant, especially oxygen gas. It is, however, also possible to carry out the oxidation in a separate, second reaction chamber.

According to embodiments, the reaction chamber adapted to chemically react waste construction material with sulfur oxides and carbon dioxide in flue gas is equipped with means for the mechanical agitation of the waste construction material. According to some preferred embodiments, the said reaction chamber (2) is an attrition mill, especially a semi-autogeneous mill or a compressive grinder. The compressive grinder preferably is a vertical roller mill or a horizontal roller mill. The semi-autogeneous mill preferably is a ball mill or an agitation mill. In such embodiments, the flue gas is directly inserted into the attrition mill, especially a vertical roller mill, horizontal roller mill, ball mill or an agitation mill.

Furthermore, the present invention provides for a power plant, or a cement plant, or a steel plant, or a waste burning plant comprising an apparatus for the desulfurization and decarbonation of a flue gas with waste construction material as described above.

In a further aspect the present invention relates to a waste construction material as described above and reacted with sulfur oxides and carbon dioxide from a flue gas. Within the present context, a waste construction material as described above and reacted with sulfur oxides and carbon dioxide from a flue gas is also called a "recycled construction material". A recycled construction material is obtained in a method for the desulfurization and decarbonization of a flue gas comprising sulfur oxides and carbon dioxide of the present invention. In other words, a "recycled construction material" is the reaction product of a waste construction material which was used in a method of the present invention. The present invention thus also relates to a recycled construction material obtained in a method of the present invention.

According to some embodiments, the recycled construction material is ground to a dry powder. This is especially the case, where the reaction of waste construction material with sulfur oxides and carbon dioxide from the flue gas takes place in a reaction chamber with means for mechanical agitation, and especially where the reaction chamber is a vertical roller mill, horizontal roller mill, ball mill or an agitation mill.

It is additionally preferred, that the recycled construction material is separated into aggregates and into a fine mineral powder, said fine mineral powder containing the reaction products of hardened mineral binder, especially of cement, with sulfur oxides and carbon dioxide form the flue gas. In some preferred embodiments, the hardened mineral binder is fully carbonated. According to embodiments, separation is effected at a predefined cut-off particle size in order to retrieve recycled, cleaned aggregates with a particle size of at least the predefined cut-off particle size and/or in order to retrieve powdery material with a particle size below the predefined cut-off particle size. According to further embodiments, it is also possible to separate the cleaned aggregates into fractions of different particle size. Separation can be done by filtration, sieving, sedimentation, density separation, wind sifting, e.g. in cyclones, and/or centrifugation.

Recycled construction material obtained in a method of the present invention can be used in the production of fresh construction material, especially fresh concrete or mortar. The present invention therefore also relates to the use of a recycled construction material as described above in the production of fresh construction material, especially fresh concrete or mortar.

Depending on the chemical composition of the recycled construction material it can be used as an aggregate or as supplementary cementitious material.

### Exemplary embodiments

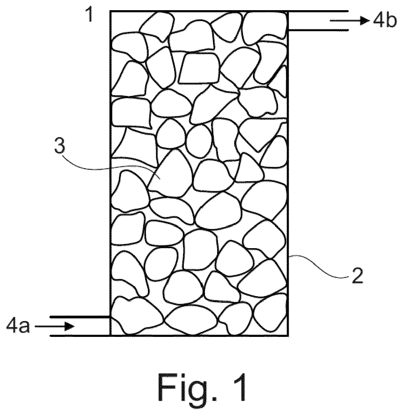

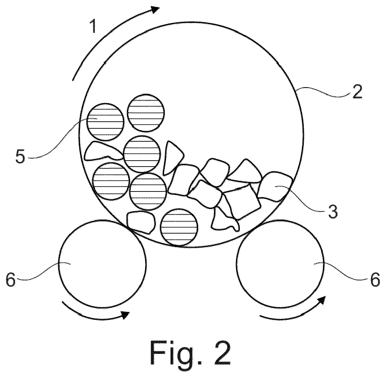

The following numerations are used in figures 1 and 2:
1: apparatus for the desulfurization and decarbonization of flue gas
2: reaction chamber
3: waste construction material
4a: flue gas inlet
4b: flue gas outlet
5: grinding media
6: drive rollers

Figure 1 shows one embodiment of an apparatus for the desulfurization and decarbonization of flue gas (1) comprising a reaction chamber (2) filled with waste construction material (3). Flue gas is inserted into the rection chamber (2) via the flue gas inlet (4a). After reaction with the waste construction material (3) in the reaction chamber (2), flue gas exits via the flue gas outlet (4b).

Figure 2 shows another embodiment of an apparatus for the desulfurization and decarbonization of flue gas (1) comprising a reaction chamber (2). The reaction chamber (2) contains waste construction material (3) and a grinding media (5), for example steel balls. The free volume of the reaction chamber (2) is filled with flue gas. The reaction chamber (2) rotates in the indicated direction when the drive rollers (6) are operated. Waste construction material (3) is thereby ground by the action of the grinding media (5) and reacts with sulfur oxides and carbon dioxide contained in the flue gas. The apparatus for the desulfurization and decarbonization of flue gas (1) shown in figure 2 can be a ball mill.

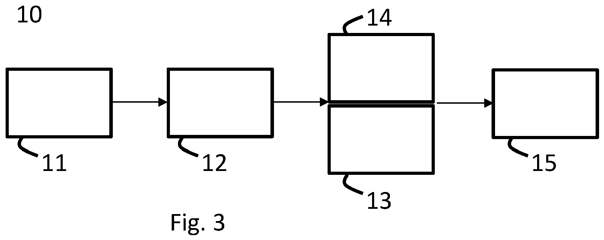

Figure 3 shows a flowchart of an inventive method for the desulfurization and decarbonization of a flue gas (10). In a first step 11, which is entirely optional, the flue gas is cleaned, e.g. by means of a fabric filter, a membrane, an electro filtration unit, and/or a separator. In a second step 12, which is entirely optional, the flue gas including the sulfur oxides and the carbon dioxide is pressurized. Pressurization can utilize one or more compression units. In a third step 13, the flue gas is desulfurized. In a fourth step 14, the flue gas is decarbonized. Desulfurization and decarbonization of the flue gas preferably take place simultaneously by the reaction of sulfur oxides and carbon dioxide from the flue gas with waste construction material in a reaction chamber. Thus, steps 13 and 14 preferably are carried out simultaneously. In a fifth step 15, which is entirely optional, but preferably present if step 12 is present, the flue gas is expanded by an expander.

## Claims

1. A method for the desulfurization and decarbonization of a flue gas comprising sulfur oxides and carbon dioxide, said method comprising a step of treating said flue gas with a material reactive towards sulfur oxides and carbon dioxide, **characterized in that** said reactive material is waste construction material.

2. A method as claimed in claim 1, **characterized in that** the desulfurization and decarbonation is done simultaneously.

3. A method as claimed in at least one of the preceding claims, **characterized in that** the amount of CaO and/or Ca(OH)₂ in the waste construction material is not lower than 10 w%, preferably not lower than 20 w%, more preferably not lower than 30 w%, still more preferably not lower than 40 w%, especially not lower than 60 w%, in each case relative to the total dry mass of the waste construction material.

4. A method as claimed in at least one of the preceding claims, **characterized in that** the waste construction material comprises or consists of waste concrete or mortar, especially waste concrete or mortar from demolition.

5. A method as claimed in at least one of the preceding claims, **characterized in that** the degree of carbonization of waste construction material to be used in a method of the present invention is not higher than 80%, preferably not higher than 66%, more preferably not higher than 50%, still more preferably not higher than 33%, especially not higher than 10%.

6. A method as claimed in at least one of the preceding claims, **characterized in that** the waste construction material is mechanically agitated during the desulfurization and decarbonation of flue gas.

7. A method as claimed in at least one of the preceding claims, **characterized in that** it additionally comprises a step of oxidizing sulfur components obtained from the desulfurization of the flue gas.

8. An apparatus for the desulfurization and decarbonation of a flue gas with waste construction material (1), said apparatus for the desulfurization and decarbonation comprising:
a) at last one reaction chamber (2) adapted to chemically react waste construction material (3) with sulfur oxides and carbon dioxide in flue gas,
b) optionally means for the mechanical agitation of the waste construction material,
c) optionally a compression unit positioned upstream of the at least one reaction chamber,
d) optionally an expander positioned downstream of the at least one reaction chamber.

9. An apparatus according to claim 8, **characterized in that** said reaction chamber (2) is an attrition mill, especially a semi-autogeneous mill or a compressive grinder.

10. A power plant, or a cement plant, or a steel plant, or a waste burning plant comprising an apparatus for the desulfurization and decarbonation of a flue gas with waste construction material according to claims 8 or 9.

11. A recycled construction material obtained in a method according to at least one of claims 1 - 7.

12. Use of a recycled construction material according to claim 11 in the production of fresh construction material, especially fresh concrete or mortar.
